# EUROPEAN PATENT APPLICATION

(11) **EP 4 339 807 A1**
(43) Date of publication of application: **20.03.2024**
(21) Application number: 22196409.1
(22) Date of filing: 19.09.2022
(51) Int. Cl.: G06F 16/957

(54) **SYSTEM AND METHOD FOR DYNAMICALLY GENERATING CONTENT**

(71) Applicant: Glomex GmbH, 85774 Unterföhring (DE)
(72) Inventor: Protopopov, Sergii, 04203, Kyiv (UA); Yakovenko, Vitalii, 03117, Kyiv (UA); Yagiyayev, Shamil, 03191, Kyiv (UA)
(74) Representative: Herrmann, Uwe

(57) **Abstract**

The present invention relates to a computer-implemented method for generating interactive content based on data input by a user, comprising the steps: Acquiring input from a user by means of a user interface, Selecting by means of a selection unit based on the acquired user input, from a database a plurality of files suitable to be loaded into a web browser and to be executable by a web application; Grouping by means of an allocation unit the selected plurality of files to a group of separate files, Loading the group of separate files into a web browser, Combining the files of the group of separate files by jointly executing the files of the group of separate files by the web browser, thereby generating a common content from the group of separate files, and Outputting the common content to the user by means of an embedded application running on the web browser, wherein the content preferably is a video content. Furthermore, the invention relates to a system for performing the method.

## Description

The present invention relates to a computer-implemented method and a system for automatically generating dynamic content that allows for content to be accurately displayed on different electronic devices.

Electronic devices are often configured in such a way that they can output or display only a certain type of content, leading to the requirement of offering the same content in different versions, e.g. by providing a mobile version of a website optimized for display by smartphones and a desktop version of the same website optimized for display by a computer. Conventionally, it is not possible to offer the content (e.g. a website) in such a way that a single can be displayed by different electronic devices, e.g. smartphones or computers, different types of smartphones etc.

It is the object of the present invention to alleviate or completely abolish the disadvantages of the prior art. In particular, it is an object of the invention to provide a method and system for providing content in such a way that it can accurately be displayed by different electronic devices having different characteristics.

This object is achieved by the method and system with the features recited in the independent claims. Further embodiments of the invention are the subject-matter of the dependent claims.

Thus, a computer-implemented method for generating interactive content based on data input by a user is disclosed, comprising the steps:
- Acquiring input from a user by means of a user interface,
- Selecting by means of a selection unit based on the acquired user input, from a database a plurality of files suitable to be loaded into a web browser and to be executable by a web application;
- Grouping by means of an allocation unit the selected plurality of files to a group of separate files,
- Loading the group of separate files into a web browser,
- Combining the files of the group of separate files by jointly executing the files of the group of separate files by the web browser, thereby generating a common content from the group of separate files, and
- Outputting the common content to the user by means of an embedded application running on the web browser, wherein the content preferably is a video content.

For example, a user may input via a user interface the wish to view a certain news video. Based on the input, from a database files corresponding to the desired news video are selected. The files are suitable to be loaded into a web browser and to be executable by a web application and are of a format such as 'html', 'svg', 'js', 'json', 'jpeg', 'png', etc. or any other suitable format, e.g. another format native to the web. The selected separate files are grouped to establish a link between the selected files and the desired video. The files can correspond to images, videos, texts or any other content.

The files are grouped but remain separate and thus the files are not fused into a single 'mp4', 'avi', 'ts' or any other video format. Conventionally, files or data are fused into a single content file, e.g. a video file. Conventionally, the fusion happens on a device of a data provider, e.g. a third device, and requires a lengthy rendering step.

This can mean that the data structure underlying the desired content, e.g. the video, conventionally cannot be customized according to the characteristics of an electronic device, because the data is fused into a single monolithic file. According to the present invention, however, data structure underlying the desired content is organized into a group of bundle of separate files.

Thus, if an electronic device is not capable of outputting all of the files, these files can be omitted from the group of files. In this regard, the present invention can allow to tailor the data structure underlying or encoding a content to the characteristics of an electronic device outputting the content.

The group of separate files are then loaded into a web browser where the files of the group of files are jointly execute to generate a common content, e.g. the desired news video.

The web browser preferably runs on first device, e.g. corresponding to an end user's device, and the steps of selecting files and grouping files preferably runs on a second device, e.g. a central server that can be accessed by several end user's devices.

In other words, a method according to the present invention can comprise the steps: Data ingestion and processing, Template or file execution and delivering dynamic content to an end user.

The step of combining the files of the group of separate files can be performed immediately or almost immediately after the input from the user was received by means of the user interface. For example, the method can be performed jointly by a server or second device, where the files are prepared, and a first device, e.g. an end user's browser, that combines all files (images, videos, texts) corresponding to a content on the fly at the time end user views the content.

The step of generating a common content from the group of separate files preferably means that the files remain separate but are executed simultaneously to create a seamless output such that a user experiencing the content can not distinguish the common content generated from the group of separate files from an output arising from a single file.

The method can further comprise the step: receiving a data set pertaining to a unit of content by means of a data acquisition unit, storing the data set and deriving from the data set at least one file pertaining to the unit of content and suitable to be loaded into a web browser and to be executable by a web application, wherein the file preferably is a file that when executed causes a device to at least partially output the unit of content, in particular display the content on a screen, and the file is stored in the database.

In other words, the method can comprise a step of template motion design or file creation and programming.

For example, the data set can pertain to the weather in a given city and this data set is turned into a set of files that when loaded into a web browser or embedded player will play a weather forecast for that city.

For example, the step of deriving files from a data set pertaining to a unit of content preferably is performed by a second device, e.g. a central server that can be accessed by several end user's devices or first devices. The data set pertaining to the unit of content can be obtained from a third device, e.g. a laptop of a photographer uploading photos to the second device.

A method according to the present invention, particular method steps relating to the generation of content, can be performed fully automatedly.

According to an embodiment, the at least one file pertaining to the unit of content that is stored in the database is updated if another data set pertaining to the unit of content is acquired. For example, if a new version of an asset, e.g. a video, is uploaded to the second device, the files corresponding to this unit of content can be automatically updated.

The step of jointly executing the files of the group of separate files by the web browser can be performed by a first device, e.g. an end user's device such as a smartphone or laptop, and the step of deriving from the data set at least one file pertaining to the unit of content and an updating step pertaining thereto can be performed by a first server running on a second device.

The content output to the user can comprise at least one interactive feature, configured to allow the user to interact with the content, preferably to pause or stop the output and / or to navigate the output by forwarding or rewinding. The output can also offer interactive features, such as reacting to user input, changing content flow, clickable areas/links, etc.

According to an embodiment, the method is fully automated and performed by at least one electronic device.

In order to customize the group of separate files corresponding to a unit of content to the characteristics of an end user's device or first device, the method can comprise a selection step in that only these files of the group of separate files are selected that the end user's device with its only individual characteristics can output.

Thus, the method can comprise a step of: prior to combining the files of the group of separate files by jointly executing the files of the group of separate files, determining which separate files of the group of separate files are executable by the embedded application running on the web browser, e.g. running on the first device, and only files determined to be executable by the embedded application running on the web browser are combined by jointly executing the files by the web browser.

Thus, in contrast to the conventional approach of fussing all data into a single file, e.g. an mp4- file, that may cause a device not capable of playing mp4-format not being able to output the content at all, the present invention allows in this example that this device can output the content e.g. by executing an jpeg and mp3 file contained in the group of files to output the content.

The invention further relates to a computer program product comprising instructions that when executed by a device cause the device to perform a method according to the present invention.

The invention also relates to a system for generating interactive content based on data input by a user, comprising a first electronic device and a second electronic device, wherein
the first device is configured to acquire input from a user by means of a user interface of the first device and to communicate to the second device the input acquired form the user,
the second device comprises a selection unit configured to select based on the acquired user input communicated by the first device, from a database a plurality of files suitable to be loaded into a web browser and to be executable by a web application; the second device further comprises an allocation unit configured to group the selected plurality of files to a group of separate files,
the second device is configured to by means of a delivery unit load the group of separate files into a web browser running on the first device,
the first device is configured to combine the files of the group of separate files by jointly executing the files of the group of separate files by the web browser, thereby generating a common content from the group of separate files, and
the first device is configured to output the common content to the user by means of an embedded application running on the web browser, wherein the content preferably is a video content.

The first electronic device and the second electronic device can each comprise a control unit configured to perform the method steps of a method according to the invention.

The first device (e.g. an end user's device) can be configured to combine the files of the group of separate files immediately or almost immediately after the input from the user was received by means of the user interface.

The second device (e.g. a central server accessible by multiple end user's devices) comprises a data acquisition unit configured to receive a data set pertaining to a unit of content, a database for storing the data set and an evaluation unit configured to derive from the data set at least one file pertaining to the unit of content and suitable to be loaded into a web browser and to be executable by a web application, wherein the file preferably is a file that when executed causes the first device to at least partially display to output the unit of content, in particular display the content on a screen, and the evaluation unit is configured to store the file in the database.

The evaluation unit can be configured to update the at least one file pertaining to the unit of content that is stored in the database if another data set pertaining to the unit of content is acquired by the data acquisition unit.

The embedded application running on the web browser of the first device can be configured to output to the user content comprising at least one interactive feature, configured to allow the user to interact with the content, preferably to pause or stop the output and / or to navigate the output by forwarding or rewinding, as outlined above in the context of a method according to the invention.

The first device can comprise a determination unit configured to determine which separate files of the group of separate files are executable by the embedded application running on the web browser of the first device prior to combining the files of the group of separate files by jointly executing the files of the group of separate files by the web browser, and the first device further comprises a selection unit configured to select only files determined to be executable by the embedded application running on the web browser to be combined by jointly executing the files by the web browser.

In other words, the invention can be described as follows:
The files derived from a data set pertaining to a unit of content can be regarded as dynamic content. The term "dynamic content" preferably means a set of files, such as web pages, scripts, styles, images, audio, video, etc. that comprises a web application relying on web technologies (such as JavaScript, SVG, HTML, CSS, WebAnimation, WebAudio, SMIL, etc.) and runtime provided by Player Component to provide a videolike experience to an end user.

In a first step, a content template is prepared, wherein the content template preferably is an application that produces dynamic content. Dynamic content preferably is produced on a case-by-case basis. When content template requires input data, an internal expected format for it is defined alongside with any necessary transformations from incoming formats.

In a second step, data is acquired. This step can be performed when the content template requires input data to produce a dynamic content.

Data can be acquired, e.g. from a third device, in one of the following exemplary and non-limiting ways:
- Querying 3rd party APIs, regular "polling" of available sources
- Providing APIs to allow data "pushes" into the system
- Using external databases and/or providing write access into our databases
- Subscribing to external data feeds, streams, events
- Purchasing pre-made datasets from vendors
- Scraping data from publicly available sources

Once obtained, the acquired data are used to derive files therefrom or the data is stored to be processed later, possibly on-demand.

In a third step, dynamic content is generated or produced. Dynamic content can be produced by invoking or using the content template. Depending on configuration, this step can be performed:
- On schedule
- Immediately when input data becomes available
- On demand, when a unit or type of content produced by content template is requested - may use previously obtained data, or trigger a process described in previous step

Files produced by the content template can be uploaded to storage servers and delivered to the end user via a content delivery network (CDN).

A fourth step relates to outputting the content, e.g. to Playback on the web. This step may use a player component integrated into 3rd party websites. The player component can be able to play regular video content, but also display units of content by providing necessary runtime.

To the end user both look similar, and provide similar familiar video functions, such as: play/pause, seek and / or volume/mute controls.

Additional features specific to dynamic content can be described as follows:
Due to the application-like nature, dynamic content can provide rich interactive features, such as reacting to user input, changing content flow, clickable areas/links, etc.

Dynamic content technology also allows personalization and customization of content based on user preferences, browser, device characteristics, location, etc when allowed by user consent.

Dynamic content in this context may be understood as a method or system according to the present invention.

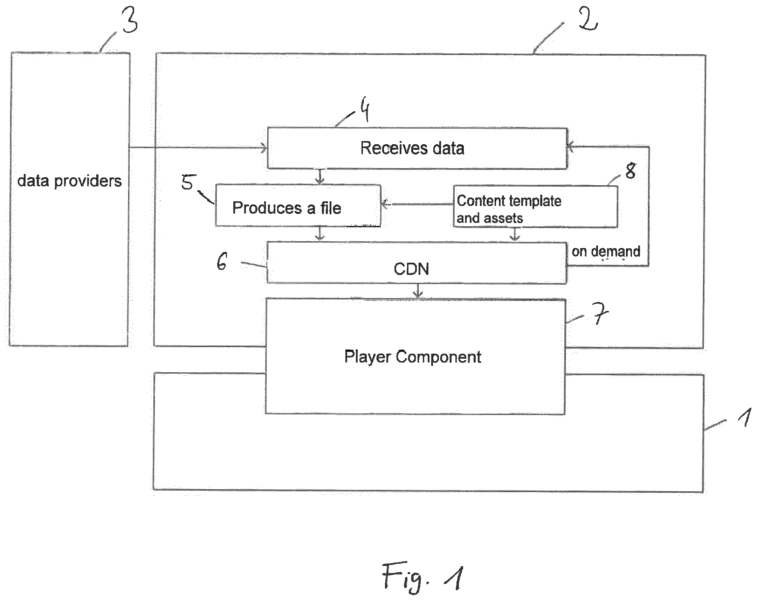

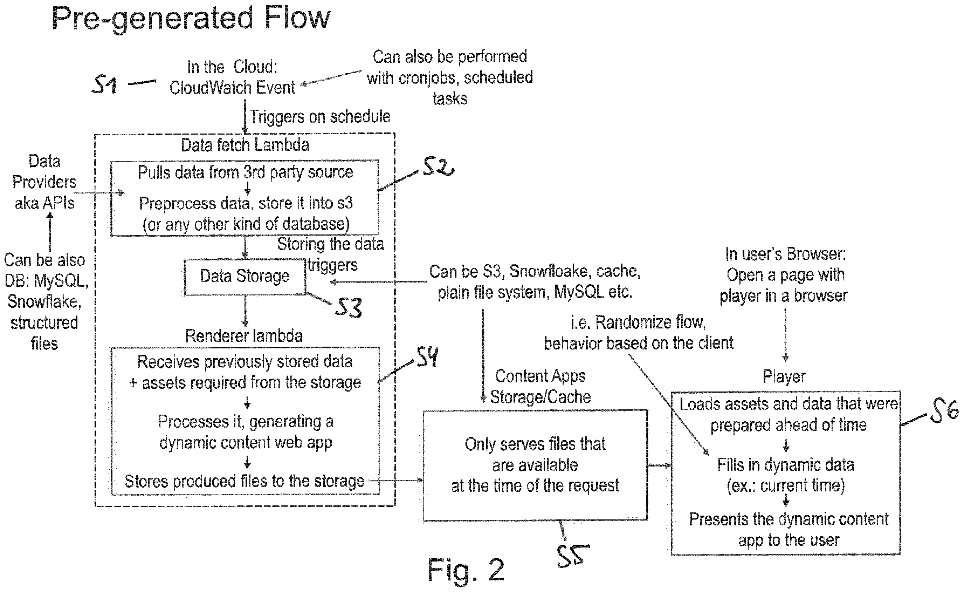

Further features, effects and advantages of the present invention become apparent from the description of an embodiment of the invention under reference to fig. 1. In the following, the invention is further illustrated by the subsequent description of embodiments of the invention taking reference to the Fig. 2 to 4. In the figures:
Fig. 1 shows a general set-up of a system according to the invention.
Fig. 2 shows an example of an implementation of the invention according to that pre-generated content is output to a user;
Fig. 3 shows an example of an implementation of the invention according to that content is generated on demand and output to a user; and
Fig. 4 shows an example of an implementation of the invention according to that content is generated in a fully automated way and output to a user.

As shown in Fig. 1, a system according to an embodiment of the invention comprises a first device 1, such an end user's smartphone and a second device 2, such as a central server. The first device 1 can acquire data from a third device 3, e.g. a laptop of a photographer uploading photos or videos.

The second device 2 comprises a data acquisition unit 4 for receiving data from the third device 3. The second device 2 further comprises an evaluation unit 5 configured to derive or produce at least one file from the data set acquired by the data acquisition unit 4.

The file or files produced by the evaluation unit can be distributed via a content distribution network (CDN) 6 to be output by a player component 7. The process of generating or outputting the content can be split between the second device 2 and the first device 1. The player component 7 can be embedded in a web browser running on the first device.

The data acquisition unit 4 can also receive data from the CDN 6, e.g. data indicating a desired content that the user of the first device 1 would like to access. These data can be used to update the files produced by the evaluation unit 5.

The second device further comprises a selection unit 8 that selects a group of separate files from the files produced by the evaluation unit 5 and groups these files before the files are distributed via the CDN 6.

In general, a method according to the invention can comprise the steps of uploading video template assets necessary for dynamic content generation to a storage, e.g. a storage of a computer forming the second device 2, creating code of a data fetching application and / or creating code for renderer lambdas for each desired topic and storing the code of the data fetching application and / or renderer lambdas, e.g. in a cloud. The renderer lambdas can be or be based on AWS lambda, PHP micro-service, any service on Azure or private hosting. Different programming allows for generating content on demand, fully automatedly or based on pre-generated content.

If a lambda is used for performing the invention, the method of the invention can be regarded as being serverless. The lamda application preferably runs a code only when triggered or requested using only the resources actually required. Thus, an implementation using lambda can prove advantageous for improving economy and / or efficiency of the application.

As shown in Fig. 2, in step S1, a trigger is received starting the process according to the invention. The trigger can be temporally fixed or scheduled or the trigger can be a detected request from a user. The trigger can thus arise e.g. from a scheduled task implemented with cronjobs or any other suitable implementation.

After the trigger has been received in step S1, in step S2, a data fetching or data acquisition unit, e.g. a code executed in Lambda, is run. The data acquisition unit acquires data from external data providers using e.g. an Application Programming Interface (API). For example, the data acquired in step S2 may be data pertaining to e.g. a temperature and ambient pressure at a given location. This data can e.g. reflect the weather at a given location but also can pertain to the internal state of a physical device (e.g. the pressure and temperature in a container).

The data is then pre-processed by the data acquisition unit and stored in a data base or memory in step S3. For storing data a database can be used e.g. MySQL, Snow-Flake, S3, a cache, a plain file system, a structured file system or any other suitable data storage. The step of data pre-processing can comprise e.g. data aggregation, allocation, feature extraction or other steps of data preprocessing. Pre-processed or processed data can be preferably regarded as assets.

Steps S2 and S3 are preferably performed by a data acquisition unit (also referred to as a data fetch lambda in the figure).

In step S4, a rendering unit (also referred to as a renderer lambda in the figure) retrieves data stored in step S3 and processes this data to generate at least one file pertaining to a dynamic content web application.

For example, the rendering unit can generate a file that when executed by a device, such as a user's smartphone, causes the device to display a piece of information, e.g. a given temperature or pressure value.

Preferably, in step S4 the rendering unit generates a plurality of files that when executed simultaneously present to the user a content in a seamless way. The term seams preferably means that the user can not perceive that the content is constituted from a plurality of files instead of from a single fused file.

In other words, the rendering unit can be configured to generate a dynamic content web application based on the data stored in step S3. Thus, in other words, the central computer (that can preferably be regarded as a second device in the terms of the claims) can be configured to generate a dynamic content web application based on the data stored in step S3.

The rendering unit then stores the produced file(s). Thus, the embodiment shown in Fig. 2 can be regarded as pertaining to a work flow comprising pre-generated content or content files, because the flow is preferably unidirectional from the second device, e.g. central server performing steps S2 to S4, to the first device, e.g. user's smartphone performing step S6. Step S1 also relates to the second device.

Step S2 in Fig. 2 corresponds to the step 4 of receiving data in Fig. 1. Step S3 in Fig. 2 corresponds to the step 8 in Fig. 1 relating to content templates and assets. Step S4 in Fig. 2 corresponds to the step 5 of producing a file in Fig. 1. Step S5 in Fig. 2 corresponds to the function of the CDN 6 in Fig. 1.

The produced file(s) is / are then retrieved by another device in step S5. In step S5 the file(s) available at the time, e.g. the files corresponding to a certain content available at the time a user enters a request for viewing the certain content, are provided to the user's smartphone.

On the smartphone, the user opens a browser running a player application. In step S6, the player loads at least a subset of the files provided in step S5, wherein the files preferably comprise assets and / or data. The player application can also be configured to insert and / or add dynamic data to the files preferably at the time point of presenting the content to the user or immediately beforehand.

In other words, the first device can comprise a dynamic data insertion unit configured to insert and / or add dynamic data to the files preferably at the time point of presenting the content to the user or immediately beforehand. The dynamic data insertion unit can utilize a randomized flow.

Dynamic data preferably refers to data that changes with time, such as for example a current time at the location of the user or the location of the user or a measurement value such as a current temperature or current pressure at a location of interest, e.g. a measurement value, for example a measurement value pertaining to the internal state prevailing in a device.

Put more generally, the invention can utilize technical data and acquire technical data in step S2. The term technical data preferably includes data pertaining to a technical device and / or data obtained via a technical device, such as a sensor.

Thus, the present invention can have the advantage that the content can be customized to different end user devices while ensuring the content is displayed properly, e.g. regardless of whether the user e.g. monitors a process running on a machine including acquired pressure and temperature data on a smartphone, a tablet or a computer.

The player application of the first device then executes the file(s) obtained in step S5 to output a content to the User. Although the content preferably is formed from a plurality of files, the user does not notice this when the content is output and cannot distinguish the content from a content arising from a single file, e.g. an mp4 file.

Preferably, steps S2 to S4 are performed on one device, e.g. a central computer, and step S6 is performed on another device, e.g. an end user device. Step S5 can be regarded as pertaining to the interaction between these two devices.

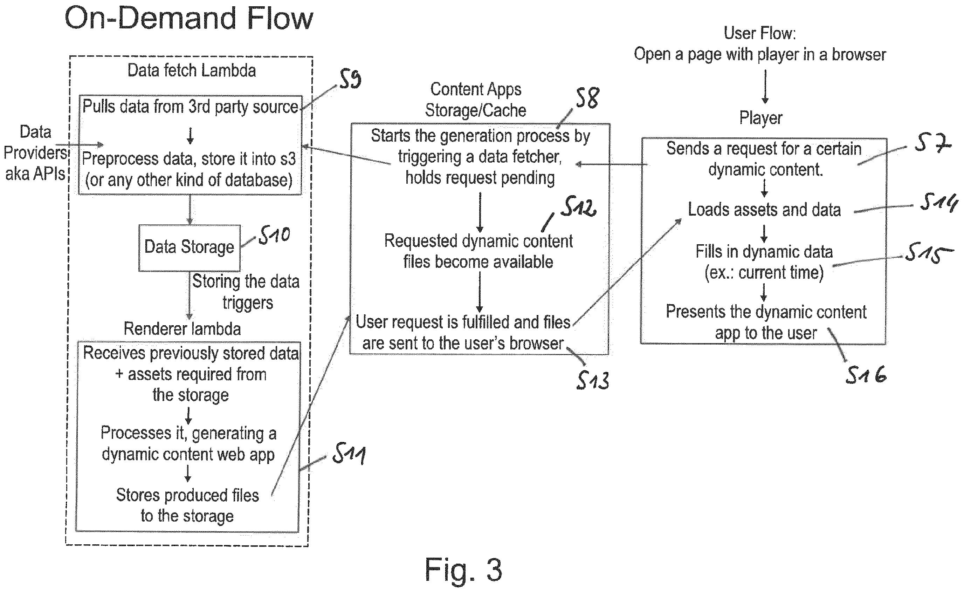

Fig. 3 shows an implementation of the invention according to that content is generated on demand and output to a user.

The process flow of Fig. 3 starts with step S7 and ends with step S16. However, this numbering merely serves the purpose of labelling each method step with a unique number and does not imply that the process flow of Fig. 3 follows after the process flow of Fig. 2 (steps S1 to S6).

In step S7, the user inputs a request for a certain content, preferably a dynamic content into a device, e.g. a smartphone.

In step S8, the device then communicates with the central computer to start the content or file generation process by triggering the data acquisition unit.

In step S9, data is acquired using a data acquisition unit as outlined above in the context auf step S2. The steps S10 and S11 are identical to steps S3 and S4 as outlined above. However, in this embodiment, the trigger is not received as outlined in step S1 e.g. from a scheduled task but the trigger is the demand of a user to access a certain content as described in steps S7 and S8.

Once it is determined in step S12 that the files corresponding to the demanded or requested content have been generated and thus are available, in step S13 these files are grouped and sent to the end user device, in particular to a player running on a browser on the end user device. Steps S8, S12 and S13 can be performed by an interface between the central computer and the end user device (e.g. CDN). The interface can comprise a content application and utilize a data storage or cache. In other words, steps S8, S12 and S13 can be performed by the CDN 6 as shown in Fig. 1.

Thus, these steps can be regarded as being performed by the second device, e.g. central server.

In step S14, the player application running on the end user device loads the files provided in step S13 that preferably comprise assets and data.

In steps S15 and S16, dynamic data can be inserted and the content is then output to a user as outlined above in the context of S6.

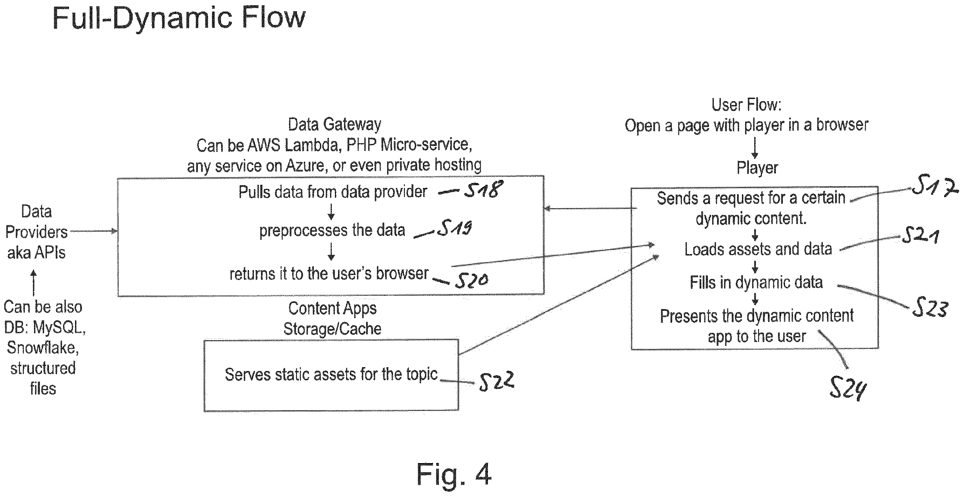

Fig. 4 shows an example of an implementation of the invention according to that content is generated in a fully automated way and output to a user. The process flow of Fig. 4 starts with step S17 and ends with step S24. However, this numbering merely serves the purpose of labelling each method step with a unique number and does not imply that the process flow of Fig. 3 follows after the process flow of Fig. 2 (steps S1 to S6) or Fig. 3 (steps S7 to S16).

In step S17 the user inputs a request for a certain content, preferably a dynamic content into a device, e.g. a smartphone, and this request is sent to a data gateway provided e.g. by the central computer. Before that the user has opened a web page in that the player application runs on the smartphone.

In step S18, a data acquisition unit acquires from external sources data pertaining to the content requested by the user. In step S19 these data are pre-processed.

In step S20, the preprocessed data is then returned to the player application running on the browser on the end users device.

In step S21, the player application loads the data provided in step S20 and preferably also in step S22 loads assets provided from a storage or cache comprising e.g. a content application. The assets can be static.

The term static asset can preferably be understood to pertain to files that remain constant and do not change with time, e.g. the general layout of a content (e.g. the measurement value of the temperature is displayed in a given font size in a box in the left corner of the display) in contrast to the dynamic data that preferably changes with time (e.g. the actual measurement value of the temperature). Thus, the static assets can be understood as pertaining to the layout and the dynamic data can be understood as pertaining to the information. Because the static assets preferably remain constant, the information can be updated very easily and efficiently according to the present invention, because only the dynamic data has to be updated. This saves a significant amount of processing power.

In step S23, dynamic data is inserted into files, e.g. the static assets, based on the data obtained in step S21.

In step S24, the dynamic content comprising the dynamic data and assets is then output or displayed to the user.

The present invention can be applied to various types of content or data such as data pertaining to the weather, gasoline prices, regional news, sport results or measurement data such as pressure or temperature values measured within a device or machine, data pertaining to maintenance work being performed on a machine etc.

A user, e.g. a user operating the end user device or smartphone in the examples shown above can select any of these contents or a combination of at least two of these types of content.

Based on this selection by the user that can be regarded as a demand of the user to access a certain type of content, the dynamic content is preferably generated.

Certain functions within the content can remain static, for example the detected location of the user can remain the same. For example, if at a given location the user first demands to access the local gasoline prices and then the local weather, the content is dynamically adapted changing from information pertaining to gasoline prices to information pertaining to the weather, while the location of the user and thus e.g. a file of the content can remain the same. For example, the outputs displaying the gasoline prices and weather data can both comprise a banner indicating the location of the user.

The person skilled in the art will understand that if in the context of this disclosure a feature is recited in the context of a certain embodiment or combination, the feature can also be claimed in isolation or in another embodiment or combination.

Furthermore, it will be apparent to the person skilled in the art that features recited in the context of a method according to the invention equally apply to the disclosed system and vice versa.

In addition to that, the articles "a" and "an" and not limited to the meaning "exactly one" but can be understood as "at least one". Thus, if an element is herein disclosed explicitly in singular form, the disclosure also contains this element in plural form and vice versa.

## Claims

1. A computer-implemented method for generating interactive content based on data input by a user, comprising the steps:
- Acquiring input from a user by means of a user interface,
- Selecting by means of a selection unit based on the acquired user input, from a database a plurality of files suitable to be loaded into a web browser and to be executable by a web application;
- Grouping by means of an allocation unit the selected plurality of files to a group of separate files,
- Loading the group of separate files into a web browser,
- Combining the files of the group of separate files by jointly executing the files of the group of separate files by the web browser, thereby generating a common content from the group of separate files, and
- Outputting the common content to the user by means of an embedded application running on the web browser, wherein the content preferably is a video content.

2. Method according to claim 1, wherein the step of combining the files of the group of separate files is performed immediatelyor almost immediately after the input from the user was received by means of the user interface.

3. Method according to claim 1 or 2, further comprising the step: receiving a data set pertaining to a unit of content by means of a data acquisition unit, storing the data set and deriving from the data set at least one file pertaining to the unit of content and suitable to be loaded into a web browser and to be executable by a web application, wherein the file preferably is a file that when executed causes a device to at least partially output the unit of content, in particular display the content on a screen, and the file is stored in the database.

4. Method according to claim 3, wherein the at least one file pertaining to the unit of content that is stored in the database is updated if another data set pertaining to the unit of content is acquired.

5. Method according to claim 3 or 4, wherein the step of jointly executing the files of the group of separate files by the web browser is performed by a first device and the step of deriving from the data set at least one file pertaining to the unit of content is performed by a first server running on a second device.

6. Method according to one of the preceding claims, wherein the content output to the user comprises at least one interactive feature, configured to allow the user to interact with the content, preferably to pause or stop the output and / or to navigate the output by forwarding or rewinding.

7. Method according to one of the preceding claims, wherein the method is fully automated and performed by at least one electronic device.

8. Method according to one of the preceding claims, wherein prior to combining the files of the group of separate files by jointly executing the files of the group of separate files, it is determined which separate files of the group of separate files are executable by the embedded application running on the web browser and only files determined to be executable by the embedded application running on the web browser are combined by jointly executing the files by the web browser.

9. Computer program product comprising instructions that when executed by a device cause the device to perform a method according to one of claims 1 to 7.

10. System for generating interactive content based on data input by a user, comprising
a first electronic device and a second electronic device, wherein
the first device is configured to acquire input from a user by means of a user interface of the first device and to communicate to the second device the input acquired form the user,
the second device comprises a selection unit configured to select based on the acquired user input communicated by the first device, from a database a plurality of files suitable to be loaded into a web browser and to be executable by a web application; the second device further comprises an allocation unit configured to group the selected plurality of files to a group of separate files,
the second device is configured to by means of a delivery unit load the group of separate files into a web browser running on the first device,
the first device is configured to combine the files of the group of separate files by jointly executing the files of the group of separate files by the web browser, thereby at least transiently generating a common content from the group of separate files, and
the first device is configured to output the common content to the user by means of an embedded application running on the web browser, wherein the content preferably is a video content.

11. System according to claim 10, wherein the first device is configured to combine the files of the group of separate files immediately or almost immediately after the input from the user was received by means of the user interface.

12. System according to claim 10 or 11, wherein
the second device comprises a data acquisition unit configured to receive a data set pertaining to a unit of content, a database for storing the data set and an evaluation unit configured to derive from the data set at least one file pertaining to the unit of content and suitable to be loaded into a web browser and to be executable by a web application, wherein the file preferably is a file that when executed causes the first device to at least partially display to output the unit of content, in particular display the content on a screen, and the evaluation unit is configured to store the file in the database.

13. System according to claim 12, wherein the evaluation unit is configured to update the at least one file pertaining to the unit of content that is stored in the database if another data set pertaining to the unit of content is acquired by the data acquisition unit.

14. System according to one of claims 10 to 13, wherein the embedded application running on the web browser of the first device is configured to output to the user content comprising at least one interactive feature, configured to allow the user to interact with the content, preferably to pause or stop the output and / or to navigate the output by forwarding or rewinding.

15. System according to one claims 10 to 14, wherein the first device comprises a determination unit configured to determine which separate files of the group of separate files are executable by the embedded application running on the web browser of the first device prior to combining the files of the group of separate files by jointly executing the files of the group of separate files by the web browser, and the first device further comprises a selection unit configured to select only files determined to be executable by the embedded application running on the web browser to be combined by jointly executing the files by the web browser.
